# EUROPÄISCHE PATENTANMELDUNG

(11) **EP 1 820 948 A1**
(43) Veröffentlichungstag der Anmeldung: **22.08.2007**
(21) Anmeldenummer: 07001962.5
(22) Anmeldetag: 30.01.2007
(51) Int. Cl.: F02B 77/08, G01M 15/10

(54) **Aufnahmevorrichtung zur Befestigung eines Brennraumfensters**

(30) Priorität: 20.02.2006 AT 2642006
(71) Anmelder: GE Jenbacher GmbH & Co. OHG, 6200 Jenbach (AT)
(72) Erfinder: Klausner, Johann, 6391 St. Jakob i.H. (AT); Egger, Christoph, 6200 Jenbach (AT); Francesconi, Christian, 8605 Kapfenberg (AT)
(74) Vertreter: Torggler, Paul Norbert

(57) **Zusammenfassung**

Aufnahmevorrichtung zur Befestigung eines Brennraumfensters (1) an einer Brennkraftmaschine mit einem das Brennraumfenster zumindest bereichsweise, insbesondere vollständig, einfassenden Dichtelement (2), wobei das Brennraumfenster eine Lichteintrittsfläche (3) und eine Lichtaustrittsfläche (4) sowie eine im Wesentlichen von der Lichteintrittsfläche und von der Lichtaustrittsfläche gesonderte Kontaktfläche (5), an der das Dichtelement am Brennraumfenster anliegt, aufweist, wobei eine erste Querschnittsfläche (6) des Brennraumfensters (1) an dem zur Lichteintrittsfläche (3) weisenden Rand des Dichtelementes im Wesentlichen gleich groß ist, wie eine zweite Querschnittsfläche (7) des Brennraumfensters (1) an dem zur Lichtaustrittsfläche (4) weisenden Rand des Dichtelementes (2).

## Beschreibung

Die Erfindung betrifft eine Aufnahmevorrichtung zur Befestigung eines Brennraumfensters an einer Brennkraftmaschine mit einem das Brennraumfenster zumindest bereichsweise, insbesondere vollständig, einfassenden Dichtelement, wobei das Brennraumfenster eine Lichteintrittsfläche und eine Lichtaustrittsfläche sowie eine im Wesentlichen von der Lichteintrittsfläche und von der Lichtaustrittsfläche gesonderte Kontaktfläche, an der das Dichtelement am Brennraumfenster anliegt, aufweist. Darüber hinaus betrifft die Erfindung auch ein Verfahren zur Anordnung eines Brennraumfensters in einer Aufnahmevorrichtung.

Die beim Stand der Technik bekannten Brennraumfenster haben vorwiegend zwei Aufgaben. Zum einen dienen sie zur Beobachtung und Analyse von Verbrennungsvorgängen in der Brennkraftmaschine. Zum Anderen können sie aber auch dazu vorgesehen sein, Licht, zum Beispiel in Form von Laserlicht, in den Brennraum der Brennkraftmaschine einzuleiten, um dort zum Beispiel eine Zündung herbeizuführen. Bei beiden Anwendungsfällen ist die Aufnahmevorrichtung samt Brennraumfenster sowohl den hohen Drücken als auch den hohen Temperaturen im Brennraum der Brennkraftmaschine ausgesetzt. Darüber hinaus sind die Brennraumfenster aber aus entsprechend hochwertigen Glassorten zu fertigen, damit sie auch die benötigten optischen Eigenschaften aufweisen.

Beim Stand der Technik ist es bekannt, kegelstumpfförmige Brennraumfenster in ein Dichtelement und eine entsprechend geformte Aufnahmevorrichtung einzupressen. Beim Einpressen kommt es dabei aber häufig zu Zerstörungen des Brennraumfensters.

In der AT 392 351 B sind zur Befestigung eines Brennraumfensters am Rand auf den Lichteintrittsflächen und Lichtaustrittsflächen anliegende Dichtungen vorgesehen. Dadurch wirkt der dort von dem Schraubteil und einer elastischen Ringpartie eingebrachte Anpressdruck auf die Lichteintritts- und Lichtaustrittsflächen, wodurch eine Zerstörung des Brennraumfensters ebenfalls begünstigt wird.

Aufgabe der Erfindung ist es einerseits eine Aufnahmevorrichtung zu schaffen, bei der die oben genannten Probleme vermieden sind. Andererseits ist es aber auch Aufgabe der Erfindung ein geeignetes Verfahren zur Anordnung eines Brennraumfensters in einer Aufnahmevorrichtung zur Verfügung zu stellen.

Hierzu ist zum einen eine Aufnahmevorrichtung vorgesehen, bei der eine erste Querschnittsfläche des Brennraumfensters an dem zur Lichteintrittsfläche weisenden Rand des Dichtelementes im Wesentlichen gleich groß ist, wie eine zweite Querschnittsfläche des Brennraumfensters an dem zur Lichtaustrittsfläche weisenden Rand des Dichtelementes.

Ein erfindungsgemäßes Einbauverfahren sieht wiederum vor, dass das Brennraumfenster in einem ersten Verfahrensschritt an einer dafür vorgesehen Stelle in ein Gehäuse der Aufnahmevorrichtung eingelegt wird und in einem zweiten, vorzugsweise daran anschließenden, Verfahrensschritt das Dichtelement zumindest bereichsweise an die Kontaktfläche des Brennraumfensters angepresst wird.

Hierdurch entfällt die stirnseitige Belastung der Oberfläche des Brennraumfensters beim Einbau, wie auch beim späteren Betrieb der Aufnahmevorrichtung. Das Brennraumfenster wird im Wesentlichen nur an seinem Umfang und nicht an der Lichteintrittsfläche oder Lichtaustrittsfläche durch das Dichtelement belastet, wodurch sowohl beim Einbau als auch beim Betrieb die Wahrscheinlichkeit der Zerstörung des Brennraumfensters deutlich gemindert ist.

Weitere Einzelheiten und Vorteile der Erfindung werden anhand der nachfolgenden Figurenbeschreibung erläutert. Dabei zeigen:
- Fig. 1 und 2: ein erstes Ausführungsbeispiel,
- Fig. 3: ein leicht abgewandeltes zweites Ausführungsbeispiel und
- Fig. 4 und 5: weitere Ausführungsbeispiele mit anderweitig ausgeformten Brennraumfenstern.

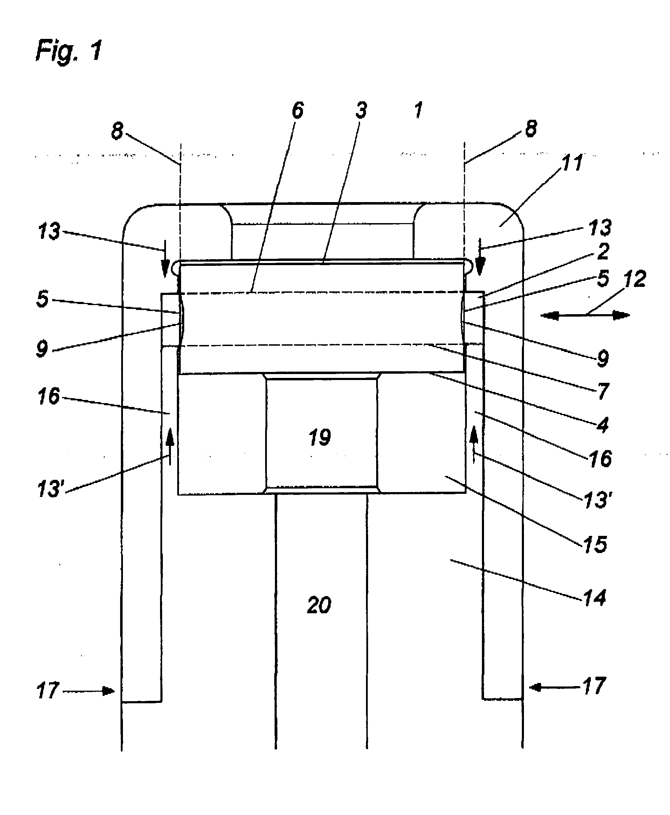

Fig. 1 zeigt ein erstes Ausführungsbeispiel mit fertig montierter Aufnahmevorrichtung und dem darin gehaltenen Brennraumfenster 1. Dieses wie auch die anderen Ausführungsbeispiele zeigen den vorderen Teil einer optischen Sonde, die zum Beobachten von Verbrennungsvorgängen im Brennraum einer Brennkraftmaschine und/oder zur Einbringung von Laserlicht in den Brennraum der Brennkraftmaschine verwendet werden kann. Vor allem bei größeren Brennkraftmaschinen wie stationären Gasmotoren oder dergleichen, sind Brennraumfenster und Aufnahmevorrichtung erheblichen Drücken und Temperaturen ausgesetzt. Die erfindungsgemäße Ausnahmevorrichtung ist daher vorzugsweise für Druckbereiche zwischen 130 bar und 300 bar, vorzugsweise zwischen 150 bar und 250 bar, und/oder für Temperaturbereiche zwischen 700° C und 1200° C, vorzugsweise zwischen 800° C und 1000° C, ausgelegt. Häufig werden die Brennraumfenster 1 an einer Brennraumseite, vorzugsweise im Zylinderkopf der Brennkraftmaschine, angeordnet. Wird das Brennraumfenster zur Einbringung von Laserlicht zur Zündung eines Kraftstoff-Luft-Gemisches im Brennraum verwendet, so ist es günstig, dass das Brennraumfenster dazu geeignet ist, das Laserlicht zu fokussieren. Dies wird zum Beispiel erreicht, indem das Brennraumfenster ein, vorzugsweise mehrteiliges, Linsensystem aufweist bzw. das Brennraumfenster als Linse ausgeführt ist.

Beim Ausführungsbeispiel gemäß Fig. 1 ist das Brennraumfenster zylinderförmig ausgebildet. Es wird in dem in Fig. 1 dargestellten fertig montierten Zustand ausschließlich von der Dichtung 2 und dem Stützelement 15 gehalten. Weder das Presselement 11 noch der Gehäusering 16 des Gehäuses 14 der Aufnahmevorrichtung stehen im direkten physischen Kontakt zum Brennraumfenster 1. Das Brennraumfenster 1 selbst kann aus Glas, vorzugsweise Saphirglas oder Quarzglas oder synthetischen Quarzglas, gebildet sein. Ein geeignetes synthetisches Quarzglas wird zum Beispiel unter dem Handelsnamen "Suprasil" von der Firma Heraeus vertrieben. Üblicherweise sind die Kanten des Brennraumfensters 1 mit einer Verrundung bzw. Fase versehen, um ein Ausbrechen der Kanten zu unterbinden.

Das Dichtelement 2 umgibt das Brennraumfenster 1 ring- bzw. röhrenförmig. Es kann sowohl aus elastisch als auch aus plastisch verformbarem Material hergestellt sein. Besonders bevorzugt sind aber plastisch deformierbare metallische Werkstoffe, wie zum Beispiel Weicheisen und/oder Kupfer und/oder Aluminium und/oder vernickelter Kupfer und/oder eine Legierung mit Kupfer und/oder Aluminium.

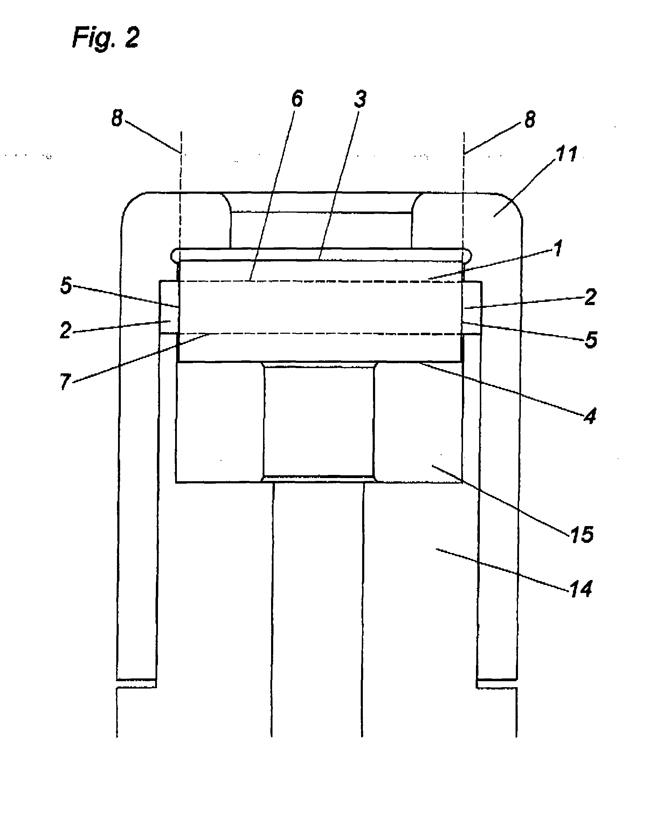

Zum Einbau wird das Brennraumfenster 1 gemäß dem erfindungsgemäßen Verfahren in einem ersten Verfahrensschritt an der dafür vorgesehenen Stelle in das Gehäuse 14 der Aufnahmevorrichtung eingelegt. In einem zweiten, vorzugsweise daran anschließenden, Verfahrensschritt wird das Dichtelement 2 dann an die Kontaktfläche 5 des Brennraumfensters 1 angepresst. Vor dem Anpressen befindet sich das Presselement 11 relativ zum Gehäuse 14 der Aufnahmevorrichtung gesehen, in der in Fig. 2 dargestellten Stellung. Das Dichtelement 2 liegt in diesem Zustand mehr oder weniger locker am Brennraumfenster 1 an. Durch Beaufschlagung des Presselementes 11 in Richtung 13 wird das Dichtelement 2, vorzugsweise plastisch, verformt und dadurch an die Kontaktfläche 5 des Brennraumfensters 1 angepresst. Die Beaufschlagung des Dichtelementes 2 durch das Presselement 11 in Richtung 13 erfolgt also im Wesentlichen senkrecht zur Hauptverformungsrichtung 12 des Dichtelementes 2. Bei dieser Verformung wird von dem Gehäusering 16 in Richtung 13' die Gegenkraft zur Beaufschlagung durch das Presselement 11 aufgebracht. Durch diese Kraftbeaufschlagung bildet das Dichtelement 2 eine, vorzugsweise zur Kontaktfläche 5 des Brennraumfensters 1 hin gerichtete, gewölbte Oberfläche aus. Die in Fig. 1 dargestellte Beaufschlagungsrichtung 13 ist günstigerweise im Wesentlichen in einer Richtung parallel zu einer Senkrechten auf die Lichteintrittsfläche 3 und/oder zur Lichtaustrittsfläche 4 gerichtet. Das Ergebnis des Deformations- bzw. Anpressvorgangs ist in der in Fig. 1 gezeigten Stellung erreicht. Anschließend ist günstigerweise vorgesehen, das Presselement 11 am Gehäuse 14, zum Beispiel im Bereich 17, vorzugsweise durch Verschweißen, zu befestigen bzw. zu fixieren. Das vorzugsweise ringförmige Stützelement 15 stützt das Brennraumfenster 1 im fixierten Zustand an seiner vom Brennraum abgewandten Seite ab. Es weist eine Durchtrittsöffnung 19 für Licht auf. Diese ist koaxial mit dem Lichtkanal 20 im Gehäuse 14 angeordnet. Bis auf die Durchtrittsöffnung 19 liegt das Brennraumfenster 1 mit seiner vom Brennraum abgewandten Oberfläche 4 formschlüssig auf dem Stützelement 15 auf.

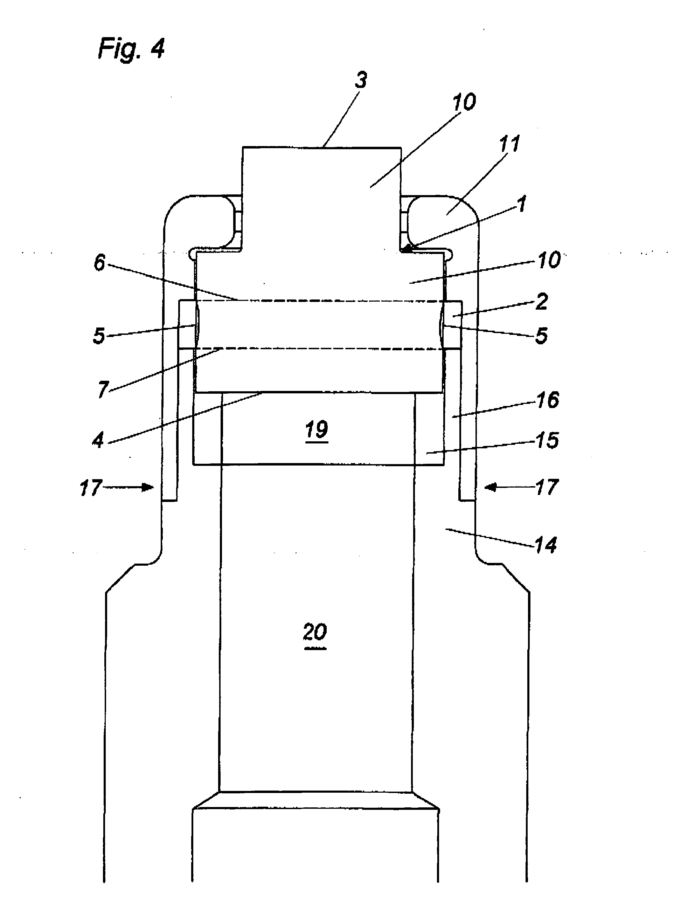

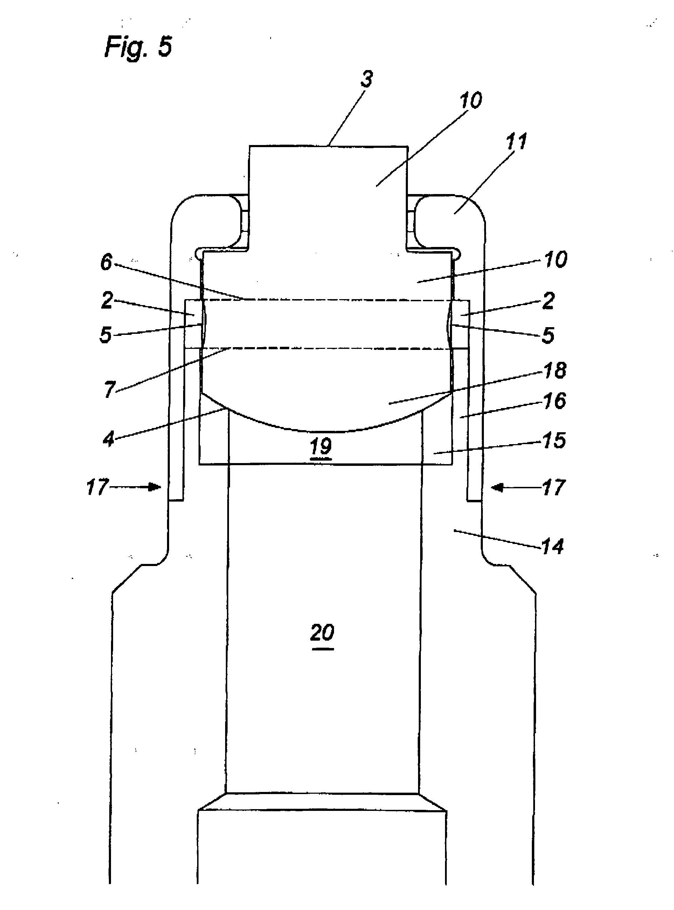

Bei den in den ersten beiden Ausführungsbeispielen gemäß der Fig. 1 bis 3 dargestellten zylinderförmigen Brennraumfenstern 1 liegen die Lichteintrittsflächen 3 und die Lichtaustrittsflächen 4 im Bereich der Zylindergrundflächen, während die Kontaktfläche 5 im Bereich der Mantelfläche des Zylinders liegt. Wie die Fig. 4 und 5 zeigen, ist die Erfindung aber keineswegs auf zylinderförmige Brennraumfenster 1 beschränkt. Unabhängig von der Gesamtform des Brennraumfensters 1 ist dabei in allen gezeigten Ausführungsbeispielen vorgesehen, dass die erste Querschnittfläche 6 des Brennraumfensters 1 an dem zur Lichteintrittsfläche 3 weisenden Rand des Dichtungselements 2 im Wesentlichen gleich groß ist wie die zweite Querschnittsfläche 7 des Brennraumfensters 1 an dem zur Lichtaustrittsfläche 4 weisenden Rand des Dichtelementes 2. In den Fig. ist die Lage der ersten Querschnittsfläche 6 und der zweiten Querschnittsfläche 7 nur gestrichelt dargestellt, da es sich nicht um physisch vorhandene Trennflächen handelt. Beide Querschnittsflächen 6 und 7 verlaufen meist parallel zueinander. Hierdurch ist in den meisten Ausführungsformen auch gegeben, dass die Kontaktfläche 5 zwischen Brennraumfenster 1 und Dichtelement 2 zumindest bereichsweise in zueinander parallelen Ebenen 8 verläuft. Dabei können bei Bedarf bereichsweise aber auch Einkerbungen oder Ausnehmungen 9 in der Kontaktfläche 5 vorgesehen sein, die für die Aufnahme des Dichtelementes 2 vorgesehen sind. Diese Ausnehmungen 9 werden in der Regel kreisförmig umlaufend im Brennraumfenster 1 vorgesehen sein. Generell ist jedenfalls vorgesehen, dass die Kontaktfläche 5 im Wesentlichen gesondert von Lichteintrittsfläche 3 und Lichtaustrittsfläche 4 angeordnet ist. Bei den meisten Formen von Brennraumfenstern ist die Kontaktfläche 5 jeweils zumindest durch eine, gegebenenfalls abgerundete, Kante von den Lichtein- oder -austrittsflächen 3 und 4 getrennt. Hierdurch wird erreicht, dass das Brennraumfenster 1 im Wesentlichen nur an seinem Umfang und nicht stirnseitig belastet ist, was ein Brechen des Brennraumfensters weitgehend unterbindet.

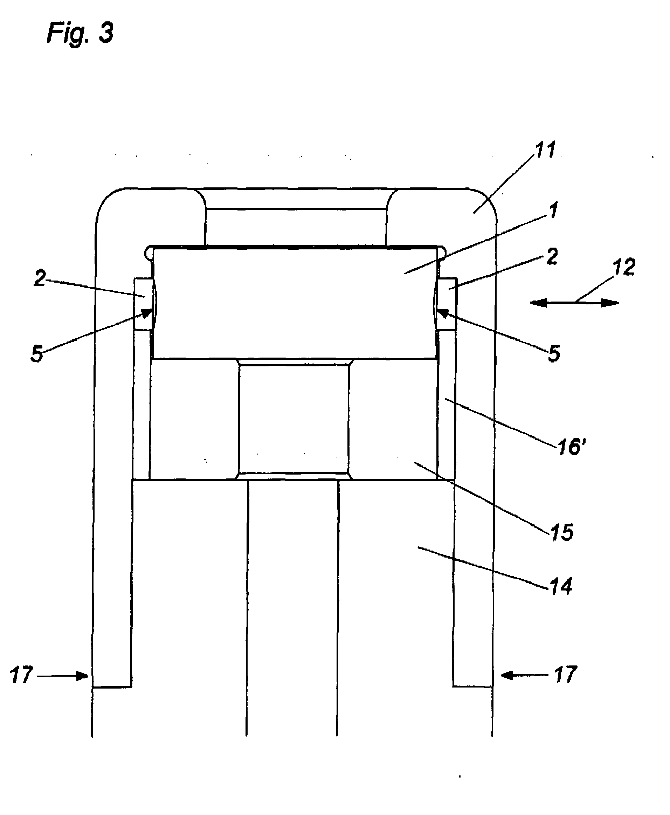

Das zweite Ausführungsbeispiel gemäß Fig. 3 unterscheidet sich von dem ersten Ausführungsbeispiel lediglich dadurch, dass der das Brennraumfenster 1 und das Stützelement 15 umfassende Gehäusering 16' gesondert vom Gehäuse 14, also als eigener ringförmiger Bauteil ausgebildet ist. Fig. 3 zeigt ansonsten den fertig montierten Zustand, bei dem das Presselement 11 am Gehäuse 14 im Bereich 17 fest geschweißt ist. Den gleichen Zustand zeigen auch die Fig. 4 und 5, bei denen Ausführungsbeispiele dargestellt sind, bei denen das Brennraumfenster 1 zwei einstückig miteinander verbundene und unterschiedliche Durchmesser aufweisende und bezüglich ihrer Symmetrieachsen koaxial angeordnete Zylinderkörper 10 aufweist. In Fig. 5 weist die vom Brennraum abgewandte Oberfläche 4 eine linsenförmige Auswölbung 18 auf. Dies kann zum Beispiel vorgesehen sein, wenn die dargestellte Sonde zur Einbringung von Laserlicht in den Brennraum vorgesehen ist: Welche der beiden Oberflächen 3 und 4 jeweils Lichteintritts- und Lichtaustrittsfläche sind, hängt lediglich davon ab, ob die Sonde zur Beobachtung von Verbrennungsvorgängen im Brennraum oder zur Einbringung von Licht, vorzugsweise Laserlicht, in den Brennraum verwendet wird.

## Patentansprüche

1. Aufnahmevorrichtung zur Befestigung eines Brennraumfensters (1) an einer Brennkraftmaschine mit einem das Brennraumfenster (1) zumindest bereichsweise, insbesondere vollständig, einfassenden Dichtelement (2), wobei das Brennraumfenster (1) eine Lichteintrittsfläche (3) und eine Lichtaustrittsfläche (4) sowie eine im Wesentlichen von der Lichteintrittsfläche (3) und von der Lichtaustrittsfläche (4) gesonderte Kontaktfläche (5), an der das Dichtelement (2) am Brennraumfenster (1) anliegt, aufweist, **dadurch gekennzeichnet, dass** eine erste Querschnittsfläche (6) des Brennraumfensters (1) an dem zur Lichteintrittsfläche (3) weisenden Rand des Dichtelementes (2) im Wesentlichen gleich groß ist, wie eine zweite Querschnittsfläche (7) des Brennraumfensters (1) an dem zur Lichtaustrittsfläche (4) weisenden Rand des Dichtelementes (2).

2. Aufnahmevorrichtung nach Anspruch 1, **dadurch gekennzeichnet, dass** die Kontaktfläche (5) zumindest bereichsweise in zueinander parallelen Ebenen (8) verläuft.

3. Aufnahmevorrichtung nach Anspruch 1 oder 2, **dadurch gekennzeichnet, dass** die Kontaktfläche (5) Einkerbungen (9) oder Ausnehmungen aufweist, die für die Aufnahme des Dichtelementes (2) vorgesehen sind.

4. Aufnahmevorrichtung nach einem der Ansprüche 1 bis 3, **dadurch gekennzeichnet, dass** die erste Querschnittsfläche (6) parallel zur zweiten Querschnittsfläche (7) verläuft.

5. Aufnahmevorrichtung nach einem der Ansprüche 1 bis 4, **dadurch gekennzeichnet, dass** das Brennraumfenster (1) im Wesentlichen zylinderförmig ausgebildet ist.

6. Aufnahmevorrichtung nach einem der Ansprüche 1 bis 4, **dadurch gekennzeichnet, dass** das Brennraumfenster (1) zwei einstückig miteinander verbundene und unterschiedliche Durchmesser aufweisende, vorzugsweise bezüglich ihrer Symmetrieachsen koaxial angeordnete, Zylinderkörper (10) aufweist.

7. Aufnahmevorrichtung nach Anspruch 5 oder 6, **dadurch gekennzeichnet, dass** die Lichteintrittsfläche (3) und die Lichtaustrittsfläche (4) im Bereich der Zylindergrundflächen liegen und die Kontaktfläche (5) im Bereich der Mantelfläche des (der) Zylinder(s) liegt.

8. Aufnahmevorrichtung nach einem der Ansprüche 1 bis 7, **dadurch gekennzeichnet, dass** das Brennraumfenster (1) im Längsschnitt eine polygonale Form aufweist.

9. Aufnahmevorrichtung nach einem der Ansprüche 1 bis 6, **dadurch gekennzeichnet, dass** zumindest ein Presselement (11) zum Beaufschlagen und Verformen des Dichtelementes (2) vorgesehen ist, wobei das Presselement (11) das Dichtelement (2) in einer Richtung (13) im Wesentlichen senkrecht zu einer Hauptverformungsrichtung (12) des Dichtelementes (2) beaufschlagt.

10. Aufnahmevorrichtung nach Anspruch 9, **dadurch gekennzeichnet, dass** das Dichtelement (2) von dem Presselement (11) im Wesentlichen in einer Richtung parallel zu einer Senkrechten auf die Lichteintrittsfläche (3) und/oder Lichtaustrittsfläche (4) beaufschlagbar ist.

11. Aufnahmevorrichtung nach Anspruch 9 oder 10, **dadurch gekennzeichnet, dass** das Dichtelement (2) durch Beaufschlagung durch das Presselement (11) eine, vorzugsweise zu der Kontaktfläche (5) des Brennraumfensters (1) hin gerichtete, gewölbte Oberfläche ausbildet.

12. Aufnahmevorrichtung nach einem der Ansprüche 9 bis 11, **dadurch gekennzeichnet, dass** das Presselement (11) an einem Gehäuse (14) der Aufnahmevorrichtung fixiert, vorzugsweise verschweißt, ist.

13. Aufnahmevorrichtung nach einem der Ansprüche 1 bis 12, **dadurch gekennzeichnet, dass** das Dichtelement (2) plastische Verformungseigenschaften aufweist.

14. Aufnahmevorrichtung nach einem der Ansprüche 1 bis 12, **dadurch gekennzeichnet, dass** das Dichtelement (2) elastische Verformungseigenschaften aufweist.

15. Aufnahmevorrichtung nach einem der Ansprüche 1 bis 14, **dadurch gekennzeichnet, dass** das Dichtelement (2) ringförmig oder rohrförmig ausgebildet ist.

16. Aufnahmevorrichtung nach einem der Ansprüche 1 bis 15, **dadurch gekennzeichnet, dass** das Dichtelement (2) aus einem metallischen Werkstoff, vorzugsweise Weicheisen und/oder Kupfer und/oder Aluminium und/oder vernickeltem Kupfer und/oder einer Legierung mit Kupfer und/oder Aluminium, gebildet ist.

17. Aufnahmevorrichtung nach einem der Ansprüche 1 bis 16, **dadurch gekennzeichnet, dass** das Brennraumfenster (1) aus Glas, vorzugsweise Saphirglas oder Quarzglas oder synthetischem Quarzglas, gebildet ist.

18. Aufnahmevorrichtung nach einem der Ansprüche 1 bis 17, **dadurch gekennzeichnet, dass** das Brennraumfenster (1) an einer Brennraumseite, vorzugsweise im Zylinderkopf, der Brennkraftmaschine angeordnet ist.

19. Aufnahmevorrichtung nach einem der Ansprüche 1 bis 18, **dadurch gekennzeichnet, dass** sie für einen Druckbereich zwischen 130 bar und 300 bar, vorzugsweise zwischen 150 bar und 250 bar, geeignet ist.

20. Aufnahmevorrichtung nach einem der Ansprüche 1 bis 19, **dadurch gekennzeichnet, dass** sie für einen Temperaturbereich zwischen 700°C und 1200°C, vorzugsweise zwischen 800°C und 1000°C, geeignet ist.

21. Aufnahmevorrichtung nach einem der Ansprüche 1 bis 20, **dadurch gekennzeichnet, dass** das Brennraumfenster (1) mit einer optischen Sonde, vorzugsweise zum Beobachten von Verbrennungsvorgängen im Brennraum einer Brennkraftmaschine, verbindbar ist oder Teil einer optischen Sonde ist.

22. Aufnahmevorrichtung nach einem der Ansprüche 1 bis 21, **dadurch gekennzeichnet, dass** das Brennraumfenster zur Einbringung von Laserlicht in den Brennraum der Brennkraftmaschine geeignet ist.

23. Aufnahmevorrichtung nach Anspruch 22, **dadurch gekennzeichnet, dass** das Brennraumfenster (1) derart ausgebildet ist, dass das Laserlicht zur Zündung eines Kraftstoff-Luft-Gemisches in den Brennraum fokussierbar ist.

24. Aufnahmevorrichtung nach einem der Ansprüche 1 bis 23, **dadurch gekennzeichnet, dass** das Brennraumfenster (1) ein, vorzugsweise mehrteiliges, Linsensystem aufweist bzw. das Brennraumfenster (1) als Linse ausgeführt ist.

25. Aufnahmevorrichtung nach einem der Ansprüche 1 bis 24, **dadurch gekennzeichnet, dass** sich das Brennraumfenster (1) im fixierten Zustand an seiner vom Brennraum abgewandten Seite an einem Stützelement (15), vorzugsweise einer Stützscheibe, abstützt.

26. Aufnahmevorrichtung nach Anspruch 25, **dadurch gekennzeichnet, dass** das Stützelement (15) mit dem Brennraumfenster (1) formschlüssig verbindbar ist.

27. Aufnahmevorrichtung nach einem der Ansprüche 1 bis 26, gegebenenfalls mit einem Stützelement (15), **dadurch gekennzeichnet, dass** das Brennraumfenster (1) ausschließlich an dem Dichtelement (2) oder bei Vorhandensein eines Stützelements (15) ausschließlich am Stützelement (15) und am Dichtelement (2) anliegt bzw. gehalten ist.

28. Aufnahmevorrichtung nach einem der Ansprüche 1 bis 27, **dadurch gekennzeichnet, dass** die Kontaktfläche (5) jeweils zumindest durch eine, gegebenenfalls abgerundete, Kante von der Lichteintrittsfläche (3) und/oder der Lichtaustrittsfläche (4) getrennt ist.

29. Brennraumfenster geeignet für eine Aufnahmevorrichtung nach einem der Ansprüche 1 bis 28.

30. Sonde mit einer Aufnahmevorrichtung nach einem der Ansprüche 1 bis 29.

31. Verfahren zur Anordnung eines Brennraumfensters (1) in einer Aufnahmevorrichtung, insbesondere nach einem der Ansprüche 1 bis 28, mit einem das Brennraumfenster (1) zumindest bereichsweise, insbesondere vollständig, einfassenden Dichtelement (2), wobei das Brennraumfenster (1) eine Lichteintrittsfläche (3) und eine Lichtaustrittsfläche (4) sowie eine im Wesentlichen von der Lichteintrittsfläche (3) und von der Lichtaustrittsfläche (4) gesonderte Kontaktfläche (5), an der das Dichtelement (2) am Brennraumfenster (1) anliegt, aufweist, **dadurch gekennzeichnet, dass** das Brennraumfenster (1) in einem ersten Verfahrensschritt an einer dafür vorgesehen Stelle in ein Gehäuse (14) der Aufnahmevorrichtung eingelegt wird und in einem zweiten, vorzugsweise daran anschließenden, Verfahrensschritt ein Dichtelement (2) zumindest bereichsweise an die Kontaktfläche (5) des Brennraumfensters (1) angepresst wird.

32. Verfahren nach Anspruch 31, **dadurch gekennzeichnet, dass** das Dichtelement (2) mittels eines Presselements (11) an die Kontaktfläche (5) des Brennraumfensters (1) angepresst wird, wobei das Dichtelement (2) vom Presselement (11) in einem von 0° abweichenden Winkel, vorzugsweise in einer Richtung (13) im Wesentlichen senkrecht, zu einer Hauptverformungsrichtung (12) des Dichtelementes beaufschlagt wird.

33. Verfahren nach Anspruch 32, **dadurch gekennzeichnet, dass** das Presselement (11) nach dem Anpressen des Dichtelementes (2) in seiner dann erreichten Position an der Aufnahmevorrichtung fixiert, vorzugsweise verschweißt, wird.

34. Verfahren nach einem der Ansprüche 31 bis 33, **dadurch gekennzeichnet, dass** das Dichtelement (2) plastisch verformt wird.
